# EUROPEAN PATENT SPECIFICATION

(11) **EP 3 586 935 B1**
(45) Date of publication and mention of the grant of the patent: **20.08.2025**
(21) Application number: 18756842.3
(22) Date of filing: 15.02.2018
(51) Int. Cl.: A63F 9/08, A63F 13/90, A63F 13/92, A63H 33/04, G06F 1/16, H01R 11/30, H01R 13/22, H01R 13/62, H04B 5/00

(54) **ELECTRONIC DEVICE WITH A THREE-DIMENSIONAL TRANSFORMABLE DISPLAY**
ELEKTRONISCHE VORRICHTUNG MIT EINER DREIDIMENSIONALEN TRANSFORMIERBAREN ANZEIGE
DISPOSITIF ÉLECTRONIQUE AVEC AFFICHEUR VOLUMIQUE TRANSFORMABLE

(30) Priority: 23.02.2017 RU 2017106039
(43) Date of publication of application: 01.01.2020
(73) Proprietor: Cubios Inc., Novato, CA 94947 (US)
(72) Inventor: OSIPOV, Ilya Viktorovich, Sarasota, Florida FL 34233 (US)
(74) Representative: Serrano Irurzun, Javier
(86) International application number: PCT/RU2018/050016
(87) International publication number: WO 2018/156055

(56) References cited:
- WO-A1-2015/070321
- RU-C1- 2 403 946
- RU-C2- 2 367 493
- SU-A1- 1 697 863
- US-A1- 2012 302 303
- US-A1- 2013 109 267
- US-B2- 8 465 356

## Description

### Field of invention

The invention falls in the category of electronic devices equipped with a three-dimensional display, which includes one central element, around which several peripheral elements are located, each having flat faces and being able to move with respect to and rotate about the central element, and each peripheral element has at least one display on an external face of the element and contact groups on the internal faces of the above-mentioned element , and the device is equipped with a microprocessor connected to a power supply installed inside the above-mentioned element and can be used for educational and data visualization purposes.

The following terms are used in this description:
- the transformable display is a display that consists of individual, smaller-size displays capable of shifting their positions relative to each other;
- a peripheral element is an element that, by contrast to the central element, is located at the external side of the device and is always visible;
- an external face of a peripheral element is a flat surface on a peripheral element, which faces the user;
- an internal face of a peripheral element is a flat surface on a peripheral element, which faces the central element and is turned away from the user.

### Background of the invention

Currently, there exists a great variety of electronic devices equipped with displays. They can be used for various purposes, in particular, presentation of graphical data, education and entertainment, including puzzle applications.

For example, the background of the invention includes a known electronic device with a three-dimensional transformable display, which includes one central element, around which several peripheral elements are located, each having flat faces and being able to move with respect to and rotate about the central element, and each peripheral element has at least one display on an external face of the element and contact groups on the internal faces of the above-mentioned element, and the device has a microprocessor connected to a power supply located inside the above-mentioned element, see the specification of US Patent No. 8465356 B2 published on June 18, 2013.

In its technical essence, that device is nearest to the claimed invention, and in the patent specification herein, the difference from that device will be described.

The drawback of that device is that all its peripheral elements are linked to the central one by means of axes, as in well-known Rubik's Cube puzzle, which makes the device subject to wear. Moreover, that device contains only one microprocessor (or as few as possible), and becomes entirely inoperative, if the processor or a processor-display connector fails. In exactly the same way, it has a single power supply installed in the central element, and, when the power supply discharges, the device also stops operating until the power supply is recharged.

Additionally, it should be noted that if this device is used as an educational or gaming tool, and information about relative positioning of the device elements is required, the device needs a gyroscope and an accelerometer. These are additional elements, which complicate the structure and may fail as well. All this affects negatively the reliability and lifetime of the device.

Furthermore, operation of this device requires data exchange between device elements, which are equipped with display units. This also adds to the mechanical complexity of the structure and increases the possibility of failures of contact groups, and there should be quite a few contact groups to ensure parallel data transmission, otherwise the speed of device operation will be low due to serial data exchange via a small number of connections.

Thus, the problem of the invention background is wearing of the elements of the device during operation, as well as its low reliability.

Other examples of the art are US2012/302303, WO2015/070321 and US2013/109267.

### Disclosure of the invention

The invention is defined by the appended claims.

The main purpose of the invention is to propose an electronic device with a three-dimensional transformable display allowing one to increase reliability and lifetime of the device, which is the engineering problem to be solved.

To achieve this goal, each peripheral element is equipped with its own microprocessor connected with the own power supply. The processor and power supply are located inside this peripheral element, and the contact groups of the element are formed by magnets, which are manufacture in such a way as to ensure the possibility of holding the adjacent peripheral elements together, while transmitting electric signals between the elements at the same time.

Due to these advantageous options, a new possibility is opened up, one to make a device without any axes or wearing movable parts, being a structure that consists of individual stationary elements connected together only due to the action of the magnetic force.

There is an option of the invention, where magnets are made as balls, which are located in spherical seats and can rotate about their centers.

This advantageous feature allows the magnets to rotate individually and match their spatial orientation with the required polarity, thus ensuring their interaction with the magnets of another element.

Another option of the invention is a structure, in which magnets are made as balls fixed on the contact groups with collars that hold the magnets in place, while letting them rotate about their centers.

This advantageous feature provides the magnets with an alternative possibility to rotate individually and match their spatial orientation with the polarity required for interaction with the magnets of another element.

The cumulative evidence of the proposed invention is unknown in the background of the invention for similar-purpose devices. This makes it possible to conclude that the novelty criterion is complied with for this invention. The use of magnets to not only hold structural elements together, but transmit electric signals as well, with correct automatic orientation of the magnetic poles shows that this solution is unobvious to an expert in the field, which, in its turn, demonstrates that the "level of invention" criterion is complied with for this invention as well.

### Brief description of the drawings

Other distinctive features and advantages of this invention appear clearly in the description presented for the sake of illustration and being not restrictive, with references to the drawings enclosed, where:
- Figure 1 shows the general view of the electronic device with a three-dimensional transformable display (2×2×2 option, static mode), according to the invention;
- Figure 2 shows the general view of the electronic device with a three-dimensional transformable display (2×2×2 option, transformation (repositioning) mode), according to the invention;
- Figure 3 shows the general view of the electronic device with a three-dimensional transformable display (2×2×2 option) with a sectional cut showing the central element, according to the invention;
- Figure 4 shows the general view of one peripheral element of the electronic device, according to the invention;
- Figure 5 shows the functional scheme of one peripheral element of the electronic device, according to the invention;
- Figure 6 shows the sectional view of the connector of a peripheral element of the electronic device, according to the invention;
- Figure 7 shows the general view of a possible variant of implementation of the electronic device, according to the invention.

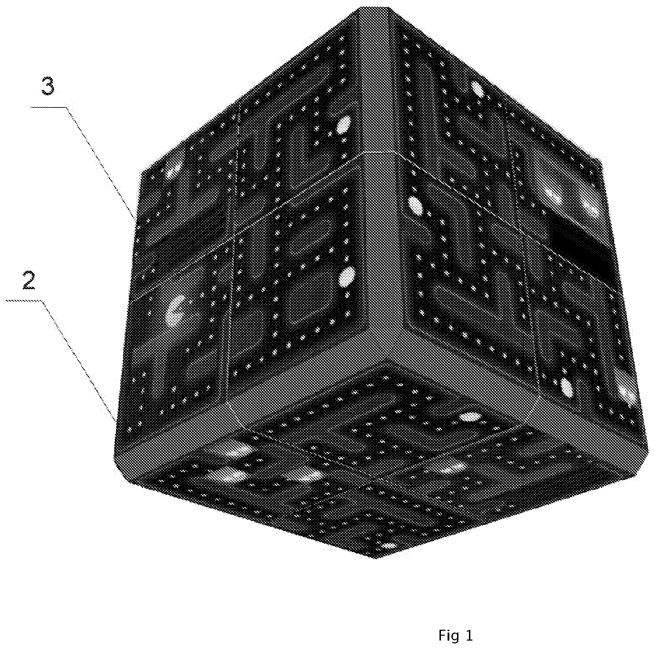

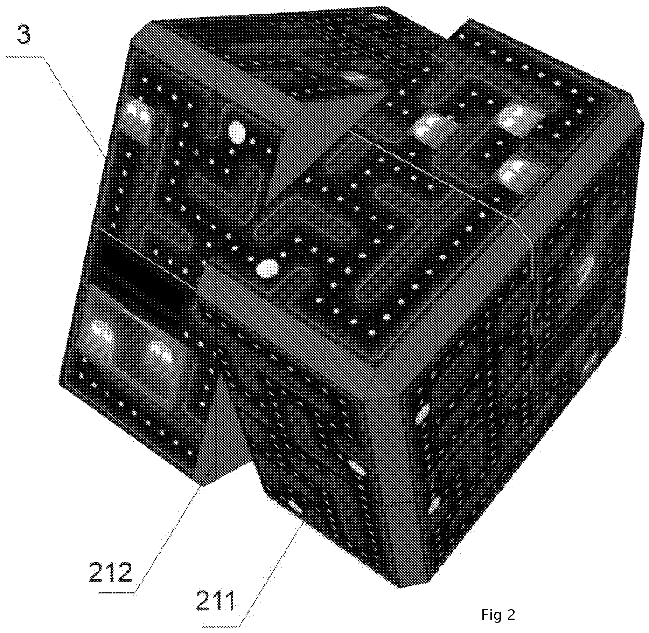

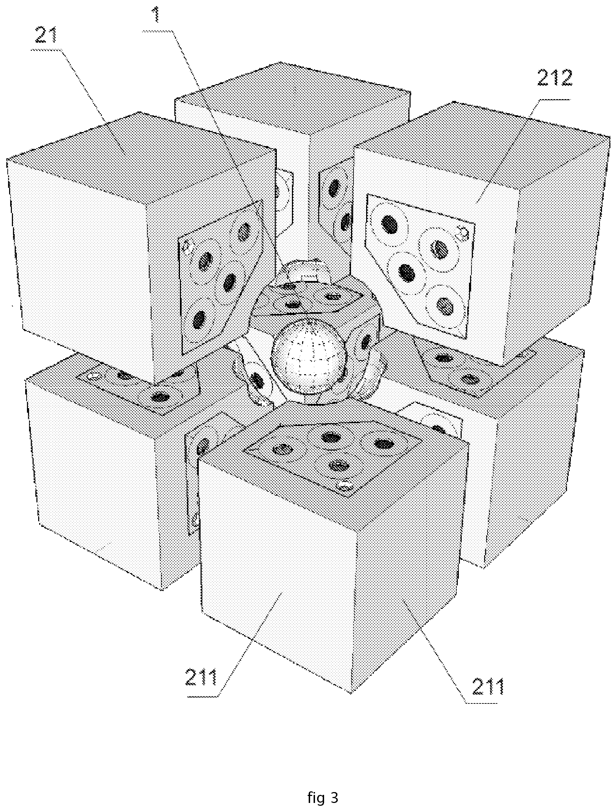

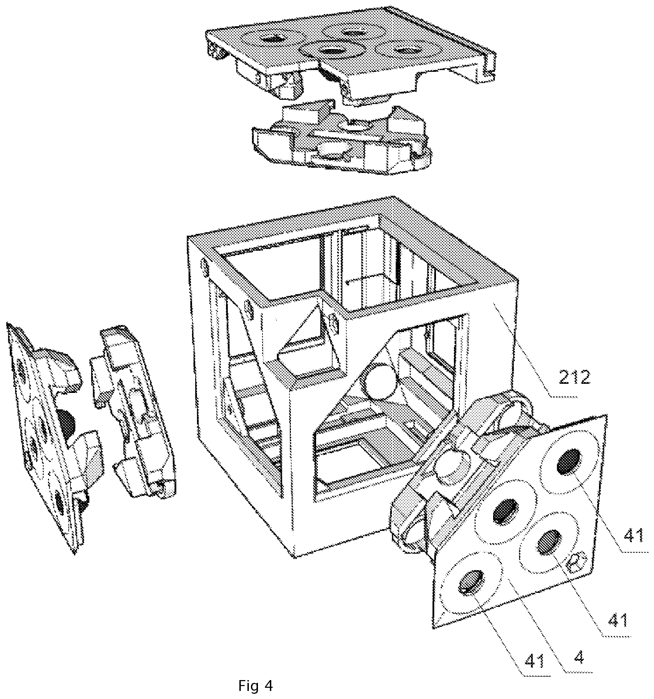

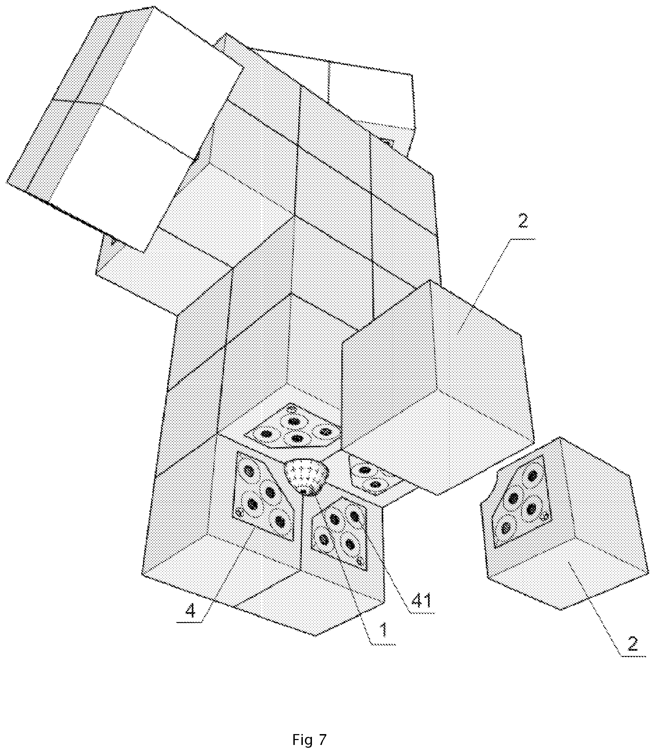

According to Figs. 1-7, the electronic device with a three-dimensional transformable display includes the central element (1) and several peripheral elements (2) located around it, which have flat faces (21) and are made so that they can move with respect to and rotate about central element 1.

Each peripheral element 2 has at least one display (3) on the external face (211) of the element and contact groups (4) located on the internal faces (212) of this peripheral element.

Each peripheral element 2 has its own microprocessor (5) connected to the own power supply (6). Microprocessor 5 and power supply 6 are located inside peripheral element 2, and contact groups 4 of peripheral element 2 are formed by magnets 41, which make it possible to hold adjacent peripheral elements together, while transmitting electric signals between the elements at the same time.

For example, magnets 41 can act as four electric connectors, of which the first one is the grounding connector, the second is the +5 V voltage one, and the third and fourth are serial ports for data reception and transmission. In this example of the contact group implementation, connector options may differ, specifically, some of them can be magnetic, while the others, nonmagnetic. Data exchange connections can use different data protocols, not only serial ones.

In the general case, the number of contacts can be different.

Magnets 41 can be made as balls which are set in spherical seats 42 and can rotate about their centers.

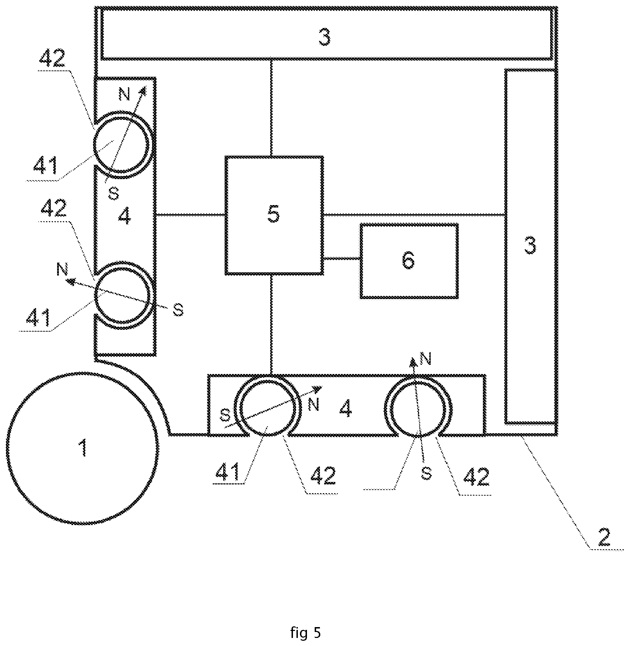

Figure 5 shows schematically the direction of the magnetic field (the arrow with letters N and S). It is seen that magnetic balls are oriented freely. As soon as such a magnetic ball is approached by another magnet installed in another peripheral element, the both balls turn in spherical seats 42 interacting with each other, and their opposite poles are attracted and hold individual elements together. Since the magnets are made of current-conducting materials, electric currents can run from one element to another. The formed electric circuit allows transmitting electric voltage and data between peripheral elements.

In the general case, the grounding connector can be connected to the central element without magnets or in direct connection.

It should be emphasized that the magnet diameter is slightly less than the diameter of spherical seats 42, i.e., the formed gap allows magnet 41 to move forward towards the matching element, which eliminates the problem of unstable gaps between peripheral elements.

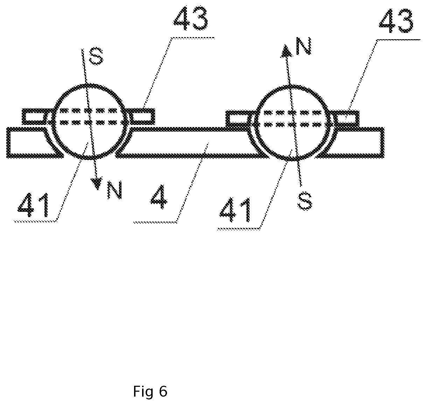

In the general case, spherical seats 42 can be replaced with special fixing elements, e.g., collars 43, which let the magnet rotate freely, while fixing it on the peripheral element (see Fig. 6).

Generally, the device can have any shape, preferably that of a three-dimensional polyhedron, a typical representative of this class being a parallelepiped, preferably a cube. The device can consist of different amounts of peripheral elements.

The main variants of the general form of the assembled device are as follows:
- 2×2×2 cube (eight peripheral elements);
- 3×3×3 cube (twenty-six peripheral elements);
- 4×4×4 cube (fifty-six peripheral elements);
- parallelepiped with different amounts of peripheral elements (2×2×3, 2×3×3, etc.);
- prisms having complicated shapes;
- polyhedrons with trapezoidal faces.

Different variants can have different amounts of displays, since there can be variants, where all peripheral elements are identical, as in the 2×2×2 case, or, as in the 3×3×3 case, the peripheral elements are not identical, but are subdivided into corner elements (with three displays each) and side elements (with two displays). Correspondingly, such peripheral elements can have different amounts of internal faces.

In the general case, peripheral elements can have additional electric components, including audio sources, microphones, and LEDs.

### Implementation of the invention

The example of operation of the electronic device with a three-dimensional transformable, which is presented here, is exhaustive allowing for the fact, however, that it does not restrict possible application of the invention.

A microprocessor and a power supply (rechargeable battery) are installed in each peripheral element and connected to displays on the external faces of the element. Thus, each peripheral element is an autonomous individual device. Being magnetically connected to similar peripheral elements via contact magnets, such elements are synchronized and can operate as an integral system, displaying a common image.

Therefore, it is possible to assemble one integral electronic device, which can display either one common image on a set of individual displays, or several different individual images, for example, one image per element face.

An important feature of such an electronic device is its mobility, i.e., the ability of individual peripheral elements to change their positions and be fixed in new positions with the general shape of the entire device being retained (in the general case, even the general shape can be transformed).

When individual peripheral elements move, the magnets of the adjacent elements are detached and reconnected in new positions. Magnets and magnetic connectors hold the structure in a certain position, but also ensure transmission of voltages and interface signals between elements by creating an electric circuit for the interaction of peripheral elements.

The central element installed in the center of the structure can be made as, e.g., a steel ball (in the general case, the shape and material of the central element can be different). It acts as an internal support for peripheral elements rotating about it.

In the state, when an internal face of one peripheral element moves closely to a similar internal face of another peripheral element, the ball magnets affected by the magnetic field of the approaching contact group rotate and are attracted to each other according to their polarity (S N/N S), thus forming electric circuits. The situation, when identical poles of the ball magnets face each other (S S/N N), is impossible, since the balls are not fixed rigidly and can rotate in their seats.

Magnets, which are fixed rigidly, and magnets, which can rotate freely, can be used simultaneously. In this case, fixed magnets can be used to ensure magnetic connection with the central ball.

### Industrial applicability

The electronic device with a three-dimensional transformable display can be implemented in practice by a specialist in the corresponding field and, being implemented, ensures realization of the stated purpose, which allows one to conclude that the "industrial applicability" criterion is complied with for this invention.

In accordance with the proposed invention, a 2×2×2 prototype of the electronic device with a three-dimensional transformable display has been manufactured and has a central ball with eight identical peripheral elements surrounding it. Each of the peripheral elements has three displays.

Tests of the prototype of the electronic device with a three-dimensional transformable display have showed that:
- it lets individual peripheral elements move easily;
- it ensures reliable mechanical connection of peripheral elements; and
- it ensures reliable electric connection of peripheral elements.

Thus, this invention achieves the stated goal, namely, improvement of reliability and lifetime of the device.

An additional useful technological result of the proposed invention is that it can be used:
1. as a new gaming space, which is attractive due to its novelty;
2. as a tool to develop spatial intelligence and cognitive skills of the gamer;
3. as a new digital desktop instrument that can display notifications about new e-mails, instant messages, information about currency rates, share prices, weather forecasts, movie times in local theaters, etc.
4. as a device that can display different information to different users (e.g., the situation, when a customer and a corporate employee are negotiating at the table and see opposite faces of the device).

### ADDITION

Additionally, this application discloses the following possible specifications of the device, which were added at the moment of submission of the international application and were not disclosed in the priority application, namely, an option of the invention, where magnets are covered with protective current-conducting plates made of a non-magnetic material, which act as contacts.

Due to this advantageous option, there appears an alternative that lets a magnetic ball get oriented freely. In this case, the above-mentioned plate covers it on the outside and ensures high-quality connection by reducing the number of contacting surfaces in a pair from three (as in Fig. 6) to one. The plate itself acts as a conductor, while the magnetic ball is but a self-orienting magnet.

There is a possible option to the invention, where protective current-conducting plates are made of brass.

The choice of the specific material for manufacture of the current-conducting plate is determined by the above-specified advantageous characteristic.

Another option of the invention is where the magnets on the inside of the peripheral element are limited by a ferromagnetic conductor connected to the peripheral element.

Due to this advantageous option, a possibility appears that at the contact instant, the ferromagnetic conductor will be located at one of the poles of the magnetic ball. This point ensures the strongest magnetic attraction and, therefore, the best possible contact. This is one of the longest-lasting design options.

Additionally, the description is supplemented with two new figures:

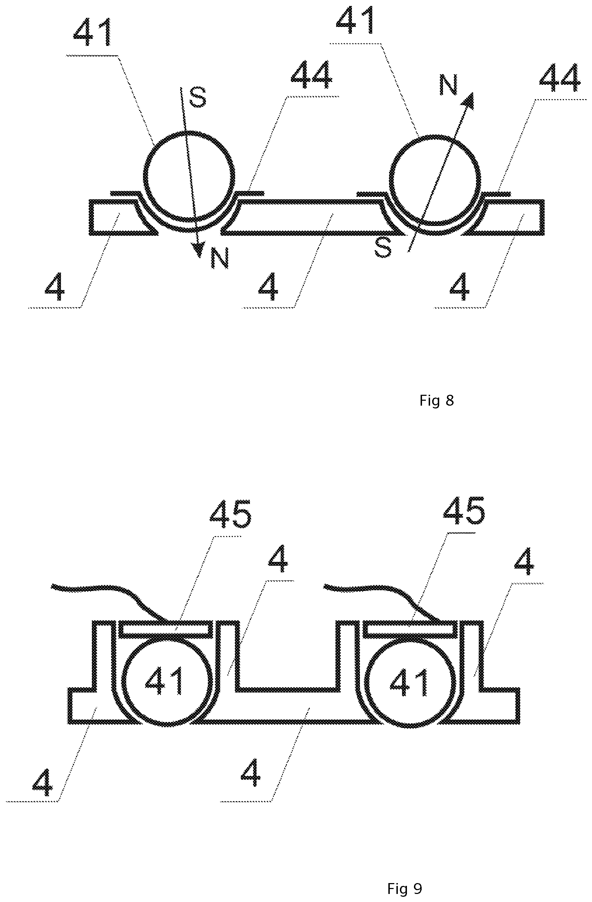

- Figure 8 is a sectional drawing of the connector of a peripheral element of the electronic device for the option, where magnets are covered with protective current-conducting plates of non-magnetic materials that act as contacts, in accordance with the invention; and
- Figure 9 is a sectional drawing of the connector of a peripheral element of the electronic device for the option, where magnets on the inside of the peripheral elements are limited by a ferromagnetic conductor connected to the peripheral element, according to the invention.

The notations in the Figures are:
44 is the current-conducting plate of a non-magnetic material, and
45 is a ferromagnetic conductor.

It is seen in Fig. 8 that this option ensures the following advantage: it lets magnetic ball 41 orient itself freely, while plate 44 covers it on the outside, thus reducing the number of contact surfaces from three (as in Fig. 6) to one and improving quality of the connection. The plate (44) itself acts as a conductor, and ball 41 is required only as a self-orienting magnet.

Figure 9 shows that ferromagnetic conductor 45 is located on the side opposite to ball 41. An advantage of this option is that at the instant of the contact, ferromagnetic conductor 45 will be located at one of the poles of magnetic ball 41. At this point, the strongest magnetic attraction and, therefore, the best possible contact are ensured.

The options in Fig. 8 and Fig. 9 are better from the viewpoint of their consumer performance, as compared to the option shown in Fig. 6. The option in Fig. 8 has a better quality of the electric contact, and the option in Fig. 9 has a longer lifetime due to the fact that plate 44 is subject to wearing.

## Claims

1. An electronic device with a three-dimensional transformable display, which includes one central element, around which several peripheral elements are located, each having flat faces and being movable with respect to, and rotatable about, the central element, and each peripheral element having at least one display on an external face of that peripheral element, and contact groups on internal faces of the peripheral element, the electronic device **characterized in that**: each peripheral element has its own microprocessor connected to its own power supply, and the microprocessor and the power supply are installed inside the peripheral element, wherein the contact groups in the peripheral element are formed from magnets, which are manufactured in such a way as to ensure the possibility of holding adjacent peripheral elements together, while transmitting simultaneously electrical signals therebetween, each of the magnets being housed in a corresponding socket that defines an interior cavity and an aperture, wherein the cavity is sized to contain the magnet while permitting the magnet to move therein, and wherein the aperture is sized to permit a portion of magnet to protrude from the socket, and wherein the socket further contains a conductive retention structure situated at a side of the magnet opposite the aperture and electrically coupled to the magnet when the magnet is engaged with a magnet from another peripheral element through the aperture.

2. The electronic device according to claim 1, **characterized in that**: the magnets are made as balls installed in the sockets and capable of rotating about their centers.

3. The electronic device according to any preceding claim, **characterized in that**: the cavity of each socket includes a portion that is spherical.

4. The electronic device according to any preceding claim, **characterized in that**: the magnets are fixed on the contact groups with collars that hold the magnets, capable of rotating about their centers, in place.

5. The electronic device according to any preceding claim, **characterized in that**: the magnets are covered with protective current-conducting plates of a non-magnetic material, which act as contacts.

6. The electronic device according to claim 5, **characterized in that**: the protective current-conducting plates are made of brass.

7. The electronic device according to claim 2, **characterized in that**: the conductive structure within the socket is composed of a ferromagnetic material, and wherein the conductive retention structure is magnetically coupled to the magnet.

## Patentansprüche

1. Elektronische Vorrichtung mit einer dreidimensionalen transformierbaren Anzeige, die ein zentrales Element schließt, um das herum mehrere periphere Elemente angeordnet sind, die jeweils flache Flächen aufweisen und in Bezug auf das zentrale Element beweglich und um dieses drehbar sind, wobei jedes periphere Element mindestens eine Anzeige auf einer Außenfläche dieses peripheren Elements und Kontaktgruppen auf Innenflächen des peripheren Elements aufweist, wobei die elektronische Vorrichtung **dadurch gekennzeichnet ist, dass**: jedes periphere Element seinen eigenen Mikroprozessor aufweist, der mit seiner eigenen Stromversorgung verbunden ist, und der Mikroprozessor und die Stromversorgung im Inneren des peripheren Elements installiert sind, wobei die Kontaktgruppen in dem peripheren Element aus Magneten gebildet sind, die so hergestellt sind, dass sie die Möglichkeit gewährleisten, angrenzende periphere Elemente zusammenzuhalten und gleichzeitig elektrische Signale zwischen ihnen zu senden, wobei jeder der Magnete in einem entsprechenden Sockel untergebracht ist, der einen inneren Hohlraum und eine Öffnung definiert, wobei der Hohlraum so bemessen ist, dass er den Magneten enthält, während er es dem Magneten erlaubt, sich darin zu bewegen, und wobei die Öffnung so bemessen ist, dass sie es einem Abschnitt des Magneten erlaubt, aus dem Sockel herauszuragen, und wobei der Sockel ferner eine leitende Rückhaltestruktur enthält, die sich an einer Seite des Magneten gegenüber der Öffnung befindet und elektrisch mit dem Magneten gekoppelt ist, wenn der Magnet durch die Öffnung in einen Magneten eines anderen peripheren Elements eingreift.

2. Elektronische Vorrichtung nach Anspruch 1, **dadurch gekennzeichnet, dass**: die Magnete als Kugeln ausgeführt sind, die in den Sockeln installiert sind und sich um ihre Mittelpunkte drehen können.

3. Elektronische Vorrichtung nach einem der vorstehenden Ansprüche, **dadurch gekennzeichnet, dass**: der Hohlraum jedes Sockels einen Abschnitt einschließt, der kugelförmig ist.

4. Elektronische Vorrichtung nach einem der vorstehenden Vorrichtungsansprüche, **dadurch gekennzeichnet, dass**: die Magnete auf den Kontaktgruppen mit Kragen befestigt sind, die die Magnete, die sich um ihre Mittelpunkte drehen können, an ihrem Platz halten.

5. Elektronische Vorrichtung nach einem der vorstehenden Vorrichtungsansprüche, **dadurch gekennzeichnet, dass**: die Magnete mit schützenden stromleitenden Platten aus einem nichtmagnetischen Material bedeckt sind, die als Kontakte in Berührung bringen.

6. Elektronische Vorrichtung nach Anspruch 5, **dadurch gekennzeichnet, dass**: die schützenden stromleitenden Platten aus Messing bestehen.

7. Elektronische Vorrichtung nach Anspruch 2, **dadurch gekennzeichnet, dass**: die leitende Struktur innerhalb des Sockels aus einem ferromagnetischen Material besteht, wobei die leitende Haltestruktur magnetisch mit dem Magneten gekoppelt ist.

## Revendications

1. Dispositif électronique à affichage tridimensionnel transformable, comprenant un élément central autour duquel sont disposés plusieurs éléments périphériques, chacun étant doté de faces planes et mobile par rapport à l'élément central et pouvant tourner autour de ce dernier, et chaque élément périphérique comportant au moins un affichage sur une face externe dudit élément périphérique, et des groupes de contact sur les faces internes de l'élément périphérique, le dispositif électronique est **caractérisé en ce que** : chaque élément périphérique possède son propre microprocesseur connecté à sa propre alimentation, et le microprocesseur et l'alimentation sont installés à l'intérieur de l'élément périphérique, dans lequel les groupes de contact dans l'élément périphérique sont formés d'aimants, qui sont fabriqués de manière à assurer la fixation des éléments périphériques adjacents tout en transmettant simultanément des signaux électriques entre eux, chacun des aimants est logé dans une prise correspondante définissant une cavité intérieure et une ouverture, la cavité étant dimensionnée pour contenir l'aimant tout en lui permettant de se déplacer en son sein, et l'ouverture étant dimensionnée pour permettre à une partie de l'aimant de dépasser de la prise, et la prise contenant en outre une structure de retenue conductrice située sur un côté de l'aimant en regard de l'ouverture et couplée électriquement à l'aimant lorsque l'aimant est en contact avec un aimant d'un autre élément périphérique à travers l'ouverture.

2. Dispositif électronique selon la revendication 1, **caractérisé en ce que** : les aimants sont réalisés sous forme de billes installées dans les prises et peuvent tourner autour de leurs centres.

3. Dispositif électronique selon l'une quelconque revendication précédente, **caractérisé en ce que** : la cavité de chaque prise comprend une partie sphérique.

4. Dispositif électronique selon l'une quelconque revendication précédente, **caractérisé en ce que** : les aimants sont fixés sur les groupes de contact au moyen de colliers qui maintiennent en place les aimants pouvant tourner autour de leurs centres.

5. Dispositif électronique selon l'une quelconque revendication précédente, **caractérisé en ce que** : les aimants sont recouverts de plaques de protection conductrices de courant constituées d'un matériau non magnétique, qui font office de contacts.

6. Dispositif électronique selon la revendication 5, **caractérisé en ce que** : les plaques de protection conductrices de courant sont en laiton.

7. Dispositif électronique selon la revendication 2, **caractérisé en ce que** : la structure conductrice à l'intérieur de la prise est composée d'un matériau ferromagnétique, et dans lequel la structure de retenue conductrice est couplée magnétiquement à l'aimant.
